(19) Europäisches Patentamt
European Patent Office
Office européen des brevets

(11) EP 3 394 119 B1

(12) FASCICULE DE BREVET EUROPEEN

(45) Date de publication et mention de la délivrance du brevet:
**12.02.2020 Bulletin 2020/07**

(21) Numéro de dépôt: **16829279.5**

(22) Date de dépôt: **22.12.2016**

(51) Int Cl.:
***C08F 36/14*** (2006.01) ***B60C 1/00*** (2006.01)
***C08C 19/20*** (2006.01) ***C08L 15/00*** (2006.01)

(86) Numéro de dépôt international:
**PCT/FR2016/053649**

(87) Numéro de publication internationale:
**WO 2017/109429 (29.06.2017 Gazette 2017/26)**

(54) **ELASTOMÈRE DIÉNIQUE PORTANT DES GROUPES PENDANTS, PROCÉDÉ DE PRÉPARATION, COMPOSITIONS ET PNEUMATIQUES LE COMPRENANT**

DIENELASTOMERE MIT ANHÄNGENDEN GRUPPEN, VERFAHREN ZUR HERSTELLUNG, ZUSAMMENSETZUNGEN UND REIFEN DIESE ENTHALTEND

DIENE ELASTOMERS HAVING PENDING GROUPS, PROCESS OF PREPARATION, COMPOSITIONS AND TIRES COMPRISING THE SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2015 FR 1563070**

(43) Date de publication de la demande:
**31.10.2018 Bulletin 2018/44**

(73) Titulaire: **Compagnie Générale des Etablissements Michelin**
**63000 Clermont-Ferrand (FR)**

(72) Inventeurs:
- **DRONET, Séverin**
  **63040 Clermont-Ferrand Cedex 9 (FR)**
- **SCHNELL, Benoît**
  **63040 Clermont-Ferrand Cedex 9 (FR)**
- **HABHAB, Karima**
  **63040 Clermont-Ferrand Cedex 9 (FR)**

(74) Mandataire: **Gandon-Pain, Sylvie**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**EP-A1- 1 674 520** **EP-A1- 2 712 887**
**FR-A1- 3 000 073**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 394 119 B1

## Description

La présente invention se rapporte aux compositions de caoutchouc destinées notamment à la fabrication de pneumatiques ou de produits semi-finis pour pneumatiques, elle est plus particulièrement relative aux systèmes plastifiants utilisables pour la plastification de telles compositions.

Les compositions de caoutchouc pour pneumatiques comportent de manière connue des agents plastifiants utilisés pour la préparation ou synthèse de certains élastomères diéniques, pour améliorer la mise en oeuvre (ou "processabilité") desdites compositions à l'état cru ainsi que certaines de leurs propriétés d'usage à l'état cuit comme par exemple, dans le cas de bandes de roulement de pneumatiques, leur adhérence sur sol mouillé.

Dans des compositions de caoutchouc comprenant un élastomère diénique, divers plastifiants de différentes natures chimiques peuvent être ajoutés notamment pour déplacer la température de transition vitreuse (Tg) d'un élastomère,

Il est à noter que l'emploi d'un plastifiant peut conférer cependant des problèmes de compatibilité.

Les inventeurs proposent de nouveaux élastomères diéniques comprenant des unités, réparties le long de la chaîne, portant un radical aliphatique jouant le rôle de plastifiant. Il a été constaté, de manière surprenante, que lorsque le plastifiant est greffé à une chaîne élastomère diénique, il est possible :

- d'augmenter la compatibilité du plastifiant, en particulier son impact sur la Tg du polymère et éviter la cristallisation du plastifiant par rapport au même plastifiant libre.
- d'éviter les phénomènes d'exsudation des plastifiants. Dans un pneumatique comprenant une composition de caoutchouc à base d'un élastomère diénique et d'un plastifiant, on peut observer des phénomènes d'exsudation des plastifiants vers l'extérieur du pneu ou vers les mélanges internes : ce qui diminue la quantité de plastifiant dans le matériau considéré, donc modifie ses performances dans le temps et cela peut aussi modifier les performances des autres postes dans lesquels le plastifiant va migrer.

Exposé de l'invention :

L'invention a pour objet un élastomère diénique, caractérisé en ce qu'il comprend des unités issues de diéniques réparties le long de la chaîne portant un groupe pendant de formule (I) suivante :

$$*\text{-SiR}_1\text{R}_2\text{-A- B}$$

dans laquelle :

- * désigne un point de liaison avec la chaîne élastomère
- $R_1$ et $R_2$, identiques ou différents représentent chacun un groupement alkyle en $C_1$-$C_5$, aryle en $C_6$-$C_{14}$, alkyle aromatique en $C_7$-$C_{11}$
- A représente un radical aliphatique en $C_3$-$C_{35}$, pouvant être interrompu par un ou plusieurs hétéroatome(s)
- B représente un radical hydrocarboné linéaire, ramifié ou cyclique en $C_1$-$C_6$

A et B sont tels que la température de fusion de l'analogue non hydrosilylé, H-A-B, soit inférieure à 70°C et l'élastomère comprend de 10 à 40 % en poids de groupes pendants de formule (I), par rapport au poids total de l'élastomère.

Avantageusement, A représente un radical en $C_{10}$-$C_{25}$, pouvant être interrompu par un ou plusieurs hétéroatome(s). En particulier, A représente un radical alkylène linéaire en $C_{10}$-$C_{25}$.

Avantageusement, B représente un radical méthyle, cyclopentyle ou cyclohexyle.

Avantageusement, $R_1$ et $R_2$, identiques ou différents, représentent chacun un groupement méthyle ou éthyle.

L'élastomère peut en particulier être obtenu par hydrosilylation d'un élastomère diénique E, en faisant réagir ledit élastomère diénique E avec un hydrogénosilane de formule (II) suivante :

$$\text{H- SiR}_1\text{R}_2\text{-A- B,}$$

où A, B, $R_1$ et $R_2$ sont tels que définis précédemment, en présence d'un catalyseur d'hydrosilylation.

L'élastomère diénique E est avantageusement l'un des polymères suivants :

(a) tout homopolymère obtenu par polymérisation d'un monomère diène conjugué ayant de 4 à 12 atomes de carbone;
(b) tout copolymère obtenu par copolymérisation d'un ou plusieurs des diènes conjugués, entre eux ou avec un ou plusieurs monomères éthyléniquement insaturés.
(c) tout homopolymère obtenu par polymérisation d'un monomère diène non conjugué ayant de 5 à 12 atomes de

carbone,

(d) tout copolymère obtenu par copolymérisation d'un ou plusieurs des diènes non conjugués, entre eux ou avec un ou plusieurs monomères éthyléniquement insaturés.

(e) un copolymère ternaire obtenu par copolymérisation d'éthylène, d'une α-oléfine ayant 3 à 6 atomes de carbone avec un monomère diène non conjugué ayant de 6 à 12 atomes de carbone;

(f) un copolymère d'isobutène et d'isoprène (caoutchouc butyle), ainsi que les versions halogénées;

(g) le caoutchouc naturel;

(h) un copolymère oléfinique insaturé dont la chaine comporte au moins des unités monomériques oléfiniques et des unités diéniques;

(i) un mélange de plusieurs des élastomères définis de (a) à (h) entre eux.

Le monomère diène conjugué est avantageusement le butadiène-1,3, le 2-méthyl-1,3-butadiène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène ou le 2,4-hexadiène.

Le monomère éthyléniquement insaturé est avantageusement un monomère vinylaromatique ayant de 8 à 20 atomes de carbone, un monomère nitrile vinylique ayant 3 à 12 atomes de carbone ou un monomère ester acrylique dérivé de l'acide acrylique ou de l'acide méthacrylique avec un alcool ayant 1 à 12 atomes de carbone.

Le monomère oléfinique est avantageusement l'éthylène ou une α-oléfine ayant 3 à 6 atomes de carbone.

En particulier, l'élastomère diénique E est choisi parmi :

- les polybutadiènes (en abrégé "BR"),
- les polyisoprènes (IR) de synthèse,
- le caoutchouc naturel (NR),
- les copolymères statistiques de butadiène, les copolymères statistiques d'isoprène, les copolymères statistiques d'éthylène-diène, plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les copolymères d'éthylène-butadiène (EBR), et
- les mélanges de ces élastomères.

L'invention a également pour objet un procédé de fabrication d'un élastomère selon l'invention, caractérisé en ce qu'il comprend la réaction d'un élastomère diénique E, tel que défini précédemment, avec un hydrogénosilane de formule (II), tel que défini précédemment, en présence d'un catalyseur d'hydrosilylation.

Le procédé comprend avantageusement l'ajout d'un antioxydant en fin de réaction.

L'invention a également pour objet une composition comprenant un élastomère selon l'invention ou obtenu par le procédé selon l'invention.

L'invention a également pour objet un pneumatique dont un des éléments constitutifs comprend une composition selon l'invention.

Descriptif des méthodes de mesure utilisées et définitions :

Tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a à b (c'est-à-dire incluant les bornes strictes a et b).

Dans la présente description, sauf indication expresse différente, tous les pourcentages (%) indiqués sont des pourcentages en masse.

Par ailleurs, le terme « pce » signifie au sens de l'invention, partie en poids pour cent parties d'élastomère total. Lorsque l'élastomère est greffé, on prend en considération le poids de l'élastomère et du greffon.

Dans la présente description, par l'expression « le long de la chaîne » en se référant aux unités comprenant le radical de formule (I), il faut entendre que l'élastomère comprend des unités de ce type en plusieurs endroits de la chaîne élastomère. Ceci inclut la ou les extrémités de la chaîne mais ne se limite pas à ces emplacements. Lorsqu'une unité comprenant le radical de formule (I) est présente en au moins une extrémité de chaîne, l'élastomère comprend également au moins une autre unité de ce type en une autre position dans la chaîne.

Dans la présente description, par l'expression « greffon », il faut entendre le bloc latéral de formule (I), définie par la suite, introduit sur le tronc de l'élastomère par greffage.

Par l'expression composition "comprenant" ou « à base de », il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la

composition, en particulier au cours de sa réticulation ou vulcanisation. Dans le cadre de l'invention, on peut utiliser des produits carbonés issus de la biomasse ou issus d'une origine non renouvelable (fossile). Ainsi, les produits carbonés sont d'origine fossile ou bio-sourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges....

• Chromatographie d'exclusion stérique

Préparation du polymère: Il n'y a pas de traitement particulier de l'échantillon de polymère avant analyse. Celui-ci est simplement solubilisé, dans du tétrahydrofurane avec 1%vol. d'eau distillée, à une concentration d'environ 1 g/L. Puis la solution est filtrée sur filtre de porosité 0,45μm avant injection.

L'appareillage utilisé est un chromatographe « WATERS alliance ». Le solvant d'élution est du tétrahydrofurane. Le débit est de 0,7 mL/min, la température du système de 35°C et la durée d'analyse de 90 min. On utilise un jeu de quatre colonnes WATERS en série, de dénominations commerciales « STYRAGEL HMW7 », « STYRAGEL HMW6E » et deux « STYRAGEL HT6E ».

Le volume injecté de la solution de l'échantillon de polymère est 100 μL. Le détecteur est un réfractomètre différentiel « WATERS 2410 » et le logiciel d'exploitation des données chromatographiques est le système « WATERS EMPOWER».

Les masses molaires moyennes calculées sont relatives à une courbe d'étalonnage réalisée à partir de polystyrènes étalons commerciaux « PSS READY CAL-KIT ».

• Microstructure et taux de groupe pendant de formule (I) par RMN

Les déterminations des taux des différentes unités monomères et de la microstructure du copolymère sont réalisées par une analyse RMN. Les spectres sont acquis sur un spectromètre 500 MHz BRUKER équipé d'une sonde " Broad Band " BBIz-grad 5 mm. L'expérience RMN 1H quantitative, utilise une séquence simple impulsion 30° et un délai de répétition de 5 secondes entre chaque acquisition. Les échantillons sont solubilisés dans le $CDCl_3$.

• Analyse DSC : mesure de Tg, de l'enthalpie de fusion et de la température de fusion

Les températures de fusion, enthalpies de fusion et températures de transition vitreuse Tg des polymères sont mesurées au moyen d'un calorimètre différentiel (" differential scanning calorimeter "). L'analyse est réalisée selon les requis de la norme ASTM D3418-08 et la norme ISO 11357-3 :2011.

La même méthode (norme ASTM D3418-08 et la norme ISO 11357-3 :2011) est utilisée pour déterminer la température de fusion du composé H-A-B, défini ci-après.

• Mesure de la rigidité (G*)

Les propriétés viscoélastiques linéaires de ces matériaux sont mesurées par cisaillement sinusoïdale de faible déformation (0,1%). Les mesures sont conduites sur un rhéomètre MCR301 (Anton Paar) à déformation imposée avec une géométrie plan-plan parallèle (20 mm de diamètre). Les expériences sont conduites sous atmosphère d'azote. Les échantillons sont moulés à 100°C (diamètre 25mm, épaisseur environ 2mm) pendant 5 minutes, puis découpés à un diamètre de 20mm avec un emporte-pièce. Le module de conservation élastique G', le module visqueux G" et le facteur de perte tanδ sont mesurés lors d'un balayage en température à 5°C/min entre -60°C et 100°C.

Le rhéomètre est calibré et les échantillons sont chargés avec précaution pour assurer des résultats reproductibles, en suivant les recommandations décrites dans Macosko CW. Rheology : principles measurement and applications. New York : Wiley-VCH ; 1994.

<u>Description détaillée de l'invention :</u>

L'invention a pour objet un élastomère diénique, caractérisé en ce qu'il comprend des unités, issues d'unités diéniques, réparties le long de la chaîne portant un groupe pendant de formule (I) suivante :

$$*\text{-SiR}_1\text{R}_2\text{-A- B}$$

dans laquelle :

- * désigne un point de liaison avec la chaîne élastomère

- $R_1$ et $R_2$, identiques ou différents, représentent chacun un groupement hydrocarboné
- A représente un radical aliphatique en $C_3$-$C_{35}$ pouvant être interrompu par un ou plusieurs hétéroatome(s)
- B représente un radical hydrocarboné linéaire, ramifié ou cyclique en $C_1$-$C_6$

A et B sont tels que la température de fusion de l'analogue non hydrosilylé, H-A-B, soit inférieure à 70°C.

L'élastomère comprend de 10 à 40 % en poids de groupes pendants de formule (I), par rapport au poids total de l'élastomère.

Dans la formule (I), un radical aliphatique désigne un radical hydrocarboné linéaire ou ramifié ou cyclique ou pouvant comprendre un ou plusieurs cycles, saturé ou insaturé. Le radical hydrocarboné peut être un radical alkylène, alcénylène, alcynylène, alkyle, alcènyle ou alcynyle linéaire, ramifié ou cyclique. Par le terme « cyclique », on entend, au sens de la présente invention, que le radical comprend un ou plusieurs groupements hydrocarbonés saturés divalents cycliques, comportant chacun de 3 à 8 atomes de carbone cycliques, avantageusement à l'exception du groupement époxyde. Dans le cas du radical A, le radical hydrocarboné peut en outre contenir un ou plusieurs hétéroatomes, tels que par exemple N, O ou Si. Dans le cas du radical B, le radical hydrocarboné ne comprend que des atomes de carbone et d'hydrogène.

Dans une variante avantageuse, aucun des radicaux A ou B ne comprend un cycle époxyde.

Selon un mode de réalisation préféré, le radical A est un radical alkylène linéaire, ramifié ou cyclique en $C_{10}$-$C_{25}$, pouvant être interrompu par un ou plusieurs hétéroatome(s), tels que par exemple N, O ou Si. En particulier, A représente un radical alkylène linéaire en $C_{10}$-$C_{25}$.

B représente avantageusement un radical méthyle, cyclopentyle ou cyclohexyle.

Selon des variantes, dans la formule (I), $R_1$ et $R_2$, identiques ou différents, désignent de préférence un groupement alkyle en $C_1$-$C_5$. En particulier, $R_1$ et $R_2$, identiques ou différents, représentent chacun un groupement méthyle ou éthyle.

Le composé H-A-B a une température de fusion inférieure à 70°C, avantageusement inférieure à 50°C.

L'élastomère selon l'invention est avantageusement obtenu par hydrosilylation d'un élastomère diénique E, en faisant réagir ledit élastomère diénique E avec un hydrogénosilane de formule (II) suivante :

$$H\text{-}SiR_1R_2\text{-}A\text{-}B,$$

où A, B, $R_1$ et $R_2$ sont tels que définis précédemment, en présence d'un catalyseur d'hydrosilylation.

Ainsi, selon l'invention, l'hydrogénosilane de formule (II) réagit par hydrosilylation sur les insaturations d'un élastomère diénique insaturé E.

Par élastomère diénique, doit être compris selon l'invention tout élastomère issu au moins en partie (i.e., un homopolymère ou un copolymère) de monomères diènes (monomères porteurs de deux doubles liaisons carbone-carbone, conjuguées ou non). L'élastomère diénique E selon l'invention comporte des insaturations de type double liaison carbone-carbone. L'élastomère E selon l'invention présente de préférence entre autres insaturations, des insaturations pendantes le long de la chaîne. Selon certaines variantes, ces insaturations pendantes sont des insaturations dites d'origine vinylique. On appelle insaturations d'origine vinylique, des insaturations pendantes de la chaîne polymérique provenant d'une insertion de type vinylique du monomère diénique dans l'élastomère. À titre d'exemples d'insaturations d'origine vinylique, on peut citer celles provenant d'une insertion de type 1,2- par exemple du butadiène, de l'isoprène ou tout autre diène possédant une insaturation en C1 (c'est-à-dire tout autre diène dont une des doubles liaisons est terminale), ou encore d'insertions de type 3,4- de l'isoprène par exemple...

Selon des variantes préférentielles, convient selon l'invention à titre d'élastomère E, tout élastomère diénique comprenant au moins des unités insaturées dont une partie est issue d'une insertion du monomère diène, conjugué ou non conduisant à une insaturation pendante, notamment, selon certaines de ces variantes, tout élastomère diénique comprenant au moins des unités insaturées dont une partie est issue d'une insertion vinylique.

En particulier, l'élastomère diénique insaturé E selon l'invention comporte des insaturations pendantes le long de la chaîne. Le taux massique des unités monomériques porteuses de ces insaturations, unités notées F, varie alors dans un domaine permettant d'atteindre le taux massique en groupes pendants de formule (I) recherché, étant noté que la modification des insaturations peut être quantitative par la réaction d'hydrosilylation. Dans ces variantes, les élastomères diéniques appropriés pour être mis en oeuvre dans le procédé de l'invention sont ceux pour lesquels le taux massique d'unités monomériques insaturées F répond à la formule suivante :

$$\%F \geq \%II \times M(F)/M(II)$$

Où

%F désigne le pourcentage en poids d'unités monomériques insaturées F, par rapport au poids total de l'élastomère E
%II désigne le pourcentage en poids de groupes de formule (II) que l'on souhaite introduire, par rapport au poids total de l'élastomère E,
M(II) désigne la masse molaire du groupe de formule (II),
M(F) désigne la masse molaire de l'unité monomèrique insaturée F.

Les élastomères diéniques appropriés pour être mis en oeuvre dans le procédé de l'invention peuvent également être fortement insaturés, avec un taux massique d'unités monomériques insaturées supérieur à 20% et pouvant atteindre 100% par rapport à la masse totale de l'élastomère.

On entend plus particulièrement par élastomère diénique susceptible d'être utilisé dans l'invention, un polymère diénique, qui est un élastomère, correspondant à l'une des catégories suivantes:

(a) tout homopolymère obtenu par polymérisation d'un monomère diène conjugué ayant de 4 à 12 atomes de carbone;
(b) tout copolymère obtenu par copolymérisation d'un ou plusieurs des diènes conjugués cités plus haut, entre eux ou avec un ou plusieurs monomères éthyléniquement insaturés;
(c) tout homopolymère obtenu par polymérisation d'un monomère diène non conjugué ayant de 5 à 12 atomes de carbone;
(d) tout copolymère obtenu par copolymérisation d'un ou plusieurs des diènes non conjugués cités plus haut, entre eux ou avec un ou plusieurs monomères éthyléniquement insaturés;
(e) un copolymère ternaire obtenu par copolymérisation d'éthylène, d'une $\alpha$-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué tels que décrits en particulier dans les documents WO 2004/035639A1 et US 2005/0239639A1;
(f) un copolymère d'isobutène et d'isoprène (caoutchouc butyle), ainsi que les versions halogénées, en particulier chlorées ou bromées, de ce type de copolymère;
(g) le caoutchouc naturel;
(h) un copolymère oléfinique insaturé dont la chaine comporte au moins des unités monomériques oléfiniques, c'est à dire des unités issues de l'insertion d'au moins une mono-oléfine, et des unités diéniques issues d'au moins un diène conjugué.
(i) un mélange de plusieurs des élastomères définis de (a) à (h) entre eux.

A titre de monomère diène conjugué approprié pour la synthèse des polymères (a), (b) et (h), on peut citer le butadiène-1,3, le 2-méthyl-1,3-butadiène, les 2,3-di(alkyle en $C_1$-$C_5$)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de monomère diène non conjugué approprié pour la synthèse des polymères (c), (d) et (e), on peut citer le pentadiène-1,4, l'hexadiène-1,4, l'éthylidène norbornène, le dicyclopentadiène;

A titre de monomères éthyléniquement insaturés susceptible d'intervenir dans la copolymérisation avec un ou plusieurs monomères diéniques, conjugué ou non, pour synthétiser les copolymères (b) ou (d), on peut citer:

- les composés vinylaromatiques ayant de 8 à 20 atomes de carbone, comme par exemple le styrène, l'ortho-, méta-, para-méthylstyrène, le mélange commercial vinylmésitylène, le divinylbenzène, le vinylnaphtalène;
- les monomères nitriles vinyliques ayant 3 à 12 atomes de carbone, comme par exemple l'acrylonitrile, le méthacrylonitrile;
- les monomères esters acryliques dérivés de l'acide acrylique ou de l'acide méthacrylique avec des alcools ayant 1 à 12 atomes de carbone, comme par exemple l'acrylate de méthyle, l'acrylate d'éthyle, l'acrylate de propyle, l'acrylate de n-butyle, l'acrylate d'isobutyle, l'acrylate d'éthyl-2 hexyle, le méthacrylate de méthyle, le méthacrylate d'éthyle, le méthacrylate de n-butyle, le méthacrylate d'isobutyle;

Les copolymères (b) ou (d) peuvent contenir entre 99% et 1% massique d'unités diéniques et entre 1% et 99% massique d'unités vinylaromatiques, nitriles vinyliques et/ou esters acryliques.

A titre de monomère mono-oléfine approprié pour la synthèse des polymères (h), on peut citer l'éthylène, une $\alpha$-oléfine ayant 3 à 6 atomes de carbone, par exemple le propylène. Préférentiellement, le monomère mono-oléfine est l'éthylène.

Selon certaines variantes, le copolymère oléfinique (h) susceptible d'être utilisé dans le procédé de l'invention, est un copolymère dont la chaine comporte des unités monomériques oléfiniques, c'est à dire des unités issues de l'insertion d'au moins une mono-oléfine, et des unités diéniques issues d'au moins un diène conjugué. Selon ces variantes, d'autres unités issues par exemple d'un monomère éthyléniquement insaturé tel que décrit plus haut, sont présentes

dans la chaine carbonée.

Selon certaines variantes, les unités monomériques oléfiniques dans le polymère (h) sont majoritaires, plus préférentiellement, le taux molaire de ces unités est supérieur à 50% par rapport au polymère. Parmi ces variantes, le taux molaire peut être d'au moins 65%. De tels élastomères et leurs procédés de synthèse sont décrits dans les demandes EP 1 092 731, EP 1 554 321, EP 1 656 400, EP 1 954 705, EP 1 957 506 et FR 3 001 223 au nom des Demanderesses.

Parmi les élastomères diéniques issus d'au moins un monomère diène conjugué utilisés dans le cadre du procédé de modification selon l'invention, on peut citer comme exemples non exclusifs, le polybutadiène, le polyisoprène, le poly chloroprène, le polyisobutylène, les copolymères statistiques du butadiène avec le styrène (SBR) et l'acrylonitrile (NBR) et leurs versions partiellement hydrogénés, les copolymères statistiques de l'isoprène avec le styrène (SIR), les copolymères statistiques de l'isoprène et du butadiène avec le styrène (SBIR), les caoutchoucs butyle ou halogénés, les terpolymères d'éthylène-propylène-diène (EPDM), les copolymères d'éthylène-diène ainsi que leurs mélanges.

Parmi ceux-ci, le ou les élastomères diéniques utilisés dans l'invention sont tout particulièrement choisis dans le groupe des polymères diéniques constitué par les polybutadiènes (en abrégé "BR"), les polyisoprènes (IR) de synthèse, le caoutchouc naturel (NR), les copolymères de butadiène, les copolymères d'isoprène, les copolymères d'éthylène-diène et les mélanges de ces polymères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les copolymères d'éthylène-butadiène (EBR).

Les élastomères utilisables selon l'invention peuvent être obtenus selon des techniques classiques de polymérisation bien connues de l'homme du métier. Les élastomères ont avantageusement une microstructure statistique. Les élastomères peuvent être préparés en dispersion, en émulsion ou en solution.

L'invention a encore pour objet un procédé de fabrication d'un élastomère selon l'invention, caractérisé en ce qu'il comprend la réaction d'un élastomère diénique E, tel que défini précédemment, avec un hydrogénosilane de formule (II), tel que défini précédemment, en présence d'un catalyseur d'hydrosilylation.

Préalablement à la réaction de greffage par hydrosilylation selon l'invention, le procédé comprend avantageusement la mise en solution dans un solvant apolaire d'au moins un élastomère diénique insaturé E, un hydrogénosilane de formule (II) et un catalyseur d'hydrosilylation. Cette solubilisation peut se faire selon toute mise en oeuvre à la disposition de l'homme du métier. Selon une mise en oeuvre, l'élastomère insaturé, l'hydrogénosilane de formule (II) et le catalyseur sont mis en solution dans le solvant apolaire sous agitation.

A titre de solvant apolaire, on peut utiliser selon le procédé conforme à l'invention tout solvant hydrocarboné inerte qui peut être par exemple un hydrocarbure aliphatique ou alicyclique comme le pentane, l'hexane, l'heptane, l'iso-octane, le cyclohexane, le méthylcyclohexane ou un hydrocarbure aromatique comme le benzène, le toluène, le xylène, ainsi que leurs mélanges. A titre préférentiel, on utilise le méthylcyclohexane ou le toluène.

A titre de catalyseur, on peut utiliser selon l'invention, tout catalyseur connu pour la catalyse de l'hydrosilylation à base de métaux de transition généralement du groupe VIII tels que le platine, le palladium, le rhodium, le ruthénium, le fer, etc.... Parmi ces différents catalyseurs employés pour la réaction d'hydrosilylation, on choisira préférentiellement les catalyseurs à base de platine tels que l'acide hexachloroplatinique hexahydraté (catalyseur de Speier) et le catalyseur platine-1,1,3,3-tétraméthyl-1,3-divinylsiloxane (catalyseur de Karstedt) et plus préférentiellement le catalyseur de Karstedt. Le catalyseur pourra être ajouté au mélange réactionnel sous toute forme usuelle, toutefois, de préférence, sous forme d'une solution dans un solvant.

De préférence, la quantité de solvant total, ou de solvant du milieu réactionnel, est telle que la concentration massique en élastomère est comprise entre 1 et 40% en masse, de préférence entre 2 et 20% et encore plus préférentiellement entre 2 et 10% dans ledit solvant. On entend par solvant total, ou solvant du milieu réactionnel, l'ensemble des solvants utilisés pour solubiliser l'élastomère insaturé, l'hydrogénosilane de formule (II) et le catalyseur d'hydrosilylation.

Le procédé selon l'invention peut avantageusement comprendre une étape de chauffage du mélange réactionnel homogène obtenu à l'étape précédente à la température de la réaction de greffage. La température de réaction de greffage est au moins 20°C et au plus 120°C, de préférence elle est d'au moins 50°C, voire au moins 60°C et au plus 100°C, voire au plus 90°C.

Le taux de greffage peut être ajusté de manière connue pour l'homme du métier, en faisant varier différentes conditions opératoires, telles que notamment la quantité de molécules à greffer, la température ou encore le temps de réaction. Il est possible d'atteindre des rendements de greffage quantitatifs.

Il convient de noter que dans le cadre de l'invention les variantes et les aspects préférentiels décrits plus haut sont combinables entre eux.

En fin de réaction, on peut ajouter des antioxydants. A titre d'antioxydant, on peut notamment citer les antioxydants phénoliques comme le 4,4'-méthylène-bis-2,6-tert-butylphénol, et les antioxydants aminés comme le N-(1,3-diméthylbutyl)-N'-phényl-p-phénylènediamine.

Un autre objet de l'invention est une composition comprenant cet élastomère tel que décrit plus haut ou préparé

par hydrosilylation selon le procédé décrit plus haut. Cette composition est avantageusement une composition de caoutchouc réticulable. Cette composition peut comprendre au moins 30% en poids de l'élastomère selon l'invention, préférentiellement au moins 40% en poids, par rapport au poids total de la composition. Avantageusement, la composition comprend de 30% à 70% en poids de l'élastomère selon l'invention, plus de 40 % à 70% en poids, par rapport au poids total de la composition.

Ainsi, la composition est à base d'un élastomère tel que décrit plus haut ou préparé par hydrosilylation selon le procédé décrit plus haut et des éventuels autres composés décrits par la suite.

Les élastomères selon l'invention peuvent être utilisés en tant que tel ou en mélanges avec un ou plusieurs autres composés. La présence de groupements de formule (I) pendants le long de la chaîne permet :

- d'augmenter la compatibilité du plastifiant, en particulier son impact sur la Tg du polymère et éviter la cristallisation du plastifiant par rapport au même plastifiant libre.
- d'éviter l'exsudation des plastifiants vers l'extérieur du pneu ou vers les mélanges internes : ce qui modifie la quantité de plastifiant dans le matériau considéré donc réduit ses performance dans le temps et cela peut aussi modifier les performances des autres postes dans lesquels le plastifiant va migrer.

La composition peut en particulier comprendre les composés suivants :

Charge nanométrique ou renforçante

Lorsqu'une charge renforçante est utilisée, on peut utiliser tout type de charge habituellement utilisée pour la fabrication de pneumatiques, par exemple une charge organique telle que du noir de carbone, une charge inorganique telle que de la silice, ou encore un coupage de ces deux types de charge, notamment un coupage de noir de carbone et de silice.

Pour coupler la charge inorganique renforçante à l'élastomère, on peut par exemple utiliser un agent de couplage (ou agent de liaison) au moins bifonctionnel destiné à assurer une connexion suffisante, de nature chimique et/ou physique, entre la charge inorganique (surface de ses particules) et l'élastomère selon l'invention, en particulier des organosilanes ou des polyorganosiloxanes bifonctionnels.

Additifs divers

La composition peut en outre comporter par ailleurs les divers additifs usuellement présents dans les compositions pour pneumatiques, en particulier les bandes de roulements, connues de l'homme du métier. On choisira par exemple un ou plusieurs additifs choisis parmi les agents de protection tels que antioxydants ou antiozonants, anti-UV, les divers agents de mise en oeuvre ou autres stabilisants, ou encore les promoteurs aptes à favoriser l'adhésion au reste de la structure de l'objet pneumatique. La composition peut contenir un système de réticulation connu de l'homme du métier, notamment un système de vulcanisation.

Dans le domaine des pneumatiques, notamment pour véhicules, les utilisations citées plus haut sont envisageables. C'est pourquoi un pneumatique dont un des éléments constitutifs comprend une composition de caoutchouc à base d'un élastomère diénique selon l'invention décrit plus haut par sa structure ou son mode de synthèse, constitue également un objet de l'invention.

Les caractéristiques précitées de la présente invention, ainsi que d'autres, seront mieux comprises à la lecture de la description suivante de plusieurs exemples de réalisation de l'invention, donnés à titre illustratif et non limitatif.

## Exemple

**Traitement appliqué à l'élastomère de départ** :

L'élastomère de départ est un SBR. Il est soumis à un traitement antioxydant par addition de 0,4 partie pour cent parties d'élastomères (pce) de 4,4'-méthylène-bis-2,6-tert-butylphénol et de 0,4 partie pour cent parties d'élastomères (pce) de N-(1,3-diméthylbutyl)-N'-phényl-p-phénylènediamine.

Les élastomères greffés ont été synthétisés en solution par hydrosilylation.

10 g de SBR sont mis en solution dans 250 mL de toluène dans un réacteur de 500 mL équipé d'une agitation mécanique, le tout est placé sous atmosphère inerte (azote). 13 mmol (4,1 g) pour E1, respectivement 26mmol (8,2g) pour E2 de $H\text{-}Si(CH3)_2\text{-}(C_{18}H_{37})$ et 200 µL pour E1, respectivement 400µL pour E2, de platine-1,1,3,3-tétraméthyl-1,3-divinylsiloxane en solution dans le xylène (catalyseur de Karstedt) (n°CAS : 68478-92-2) sont ajoutés à la solution de polymère et le milieu réactionnel est chauffé à 60 °C. Après 24h à 60 °C sous agitation, on laisse le milieu réactionnel revenir à température ambiante. Une fois revenu à température ambiante, le milieu réactionnel est ensuite coagulé dans

250 mL de méthanol.

L'élastomère remis en solution subit ensuite un traitement anti-oxydant de 0,4 partie pour cent parties d'élastomères (pce) de 4,4'-méthylène-bis-2,6-tert-butylphénol et de 0,4 partie pour cent parties d'élastomères (pce) de N-(1,3-diméthylbutyl)-N'-phényl-p-phénylènediamine.

Le SBR modifié est séché par étuvage sous vide (200 torr) à 60 °C pendant 1 jour.

Le suivi de la réaction est effectué par spectroscopie RMN$^1$H et confirmé par la réduction ou la disparition des signaux des insaturations vinyliques ($\delta$ = 4,9 ppm : =$CH_2$). Le rendement de greffage est de 67% pour E1, respectivement 47% pour E2. Le rendement de greffage est la quantité en poids de dérivé hydrogénosilane greffé par rapport à la quantité en poids d'hydrogénosilane introduit.

Par la suite, les propriétés de 3 élastomères sont étudiées :
TE = l'élastomère styrène-butadiène (SBR) non modifié,
E1, E2 = 2 SBR greffés par hydrosilylation selon un taux de greffage indiqué dans le tableau suivant :

Tableau 1

| | **TE** | **E1** | **E2** |
|---|---|---|---|
| Plastifiant *(formule (I))* | Aucun | 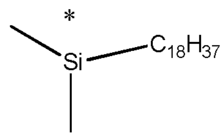 | |
| *% massique Styrène* | 29,1 | 22,9 | 21,1 |
| *% massique PB1-2* | 30,3 | 20,0 | 16,9 |
| *% massique PB1-4* | 40,6 | 31,9 | 29,6 |
| *% massique unités greffées* | 0 | 3,7 | 4,7 |
| *% massique de groupe pendant (I)* | 0 | 21,5 | 27,7 |

% massique unités greffées = unités PB1,2 après réaction d'hydrosilylation mais sans le poids du greffon, c'est-à-dire de formule :

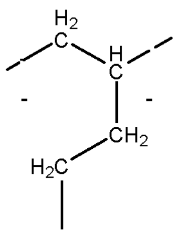

% massique de groupe pendant (I) = (% en poids du plastifiant de formule (I) / (% en poids du plastifiant de formule (I) + % en poids du SBR avant greffage)

Des mélanges témoins sont réalisés à partir de SBR non greffé et de plastifiants libres selon les proportions massiques données dans le tableau 2 suivant (% massique de plastifiant de formule (II)/ (% en poids du plastifiant de formule (II) + % en poids du SBR non greffé)).

Dans tous ces mélanges témoins, le SBR présente la même répartition en unités styrène, en unités butadiène (PB 1-2 et PB 1-4) que celle indiquée pour le SBR dans le tableau 1.

Les formulations des mélanges témoins (T1, T2, TP) sont données dans le tableau suivant :

Tableau 2

| *Nom* | **T1** | **T2** | **TP** |
|---|---|---|---|
| *Plastifiant (formule (II))* | 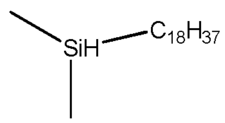 | | |
| *% massique de plastifiant de formule (II)* | 21,5 | 27,7 | 100 |

Les propriétés thermiques de chacun de ces élastomères (E1, E2) ou de ces mélanges, (T1, T2) ont été analysées par DSC (20°C/min), en particulier la Tg et la cristallisation des groupes pendants (I) ou des plastifiants libres de formule (II) (TP). Les résultats sont reportés dans le tableau suivant :

Tableau 3

| *Nom* | TE | E1 | T1 | E2 | T2 | TP |
|---|---|---|---|---|---|---|
| *Tg (°C)* | -35 | -44 | -41 | -43 | -40 | - |
| *Enthalpie de cristallisation (J/g)* | 0 | 8,0 | 32,2 | 18,8 | 40,1 | 188,7 |
| *Température de fusion (°C)* | - | -20,2 | 17,8 | -16,6 | 19,4 | 22,5 |

Le greffage des chaines alkyle en $C_{18}$ permet d'augmenter la compatibilité de ce plastifiant avec l'élastomère, en particulier de diminuer fortement la cristallisation des greffons (par rapport au plastifiant $C_{18}H_{37}Si(CH_3)_2H$ libre). Le greffage du plastifiant en $C_{18}$ par hydrosilylation permet en outre une amplification de la diminution de la Tg par rapport à ce même plastifiant libre.

Le plastifiant greffé permet :

- une augmentation de la compatibilité du plastifiant, en particulier une diminution de la cristallinité (enthalpie de fusion) du plastifiant par rapport à un plastifiant libre.
- une baisse de la Tg de l'élastomère amplifiée par rapport à un plastifiant libre.
- d'éviter l'exsudation des plastifiants vers l'extérieur du pneu ou vers les mélanges internes.

Les rigidités des élastomères (TE, E1, E2) et des mélanges témoins (T1, T2) ont été mesurées et les résultats (en base 100 par rapport au témoin) sont reportés dans le tableau suivant :

Tableau 4

| G*(40°C) | TE | E1 | T1 | E2 | T2 |
|---|---|---|---|---|---|
| Dilution par rapport au SBR de départ en base 100 (G*/G*TE) | 100 | 54 | 58 | 46 | 47 |

Les élastomères greffés avec un plastifiant confèrent les mêmes propriétés de plastification que le mélange témoin SBR + plastifiant libre.

## Revendications

1. Elastomère diénique, **caractérisé en ce qu'**il comprend des unités, issues d'unités diéniques, réparties le long de la chaîne portant un groupe pendant de formule (I) suivante :

$$*\text{-}SiR_1R_2\text{-}A\text{-}B$$

dans laquelle :

- * désigne un point de liaison avec la chaîne élastomère
- $R_1$ et $R_2$, identiques ou différents, représentent chacun un groupement alkyle en $C_1$-$C_5$, aryle en $C_6$-$C_{14}$, alkyle aromatique en $C_7$-$C_{11}$

- A représente un radical aliphatique en $C_3$-$C_{35}$, pouvant être interrompu par un ou plusieurs hétéroatome(s)
- B représente un radical hydrocarboné linéaire, ramifié ou cyclique en $C_1$-$C_6$

A et B sont tels que la température de fusion de l'analogue non hydrosilylé, H-A-B, soit inférieure à 70°C et l'élastomère comprend de 10 à 40 % en poids de groupes pendants de formule (I), par rapport au poids total de l'élastomère.

**2.** Elastomère selon la revendication 1, **caractérisé en ce que** A représente un radical en $C_{10}$-$C_{25}$, pouvant être interrompu par un ou plusieurs hétéroatome(s).

**3.** Elastomère selon l'une quelconque des revendications précédentes, **caractérisé en ce que** A représente un radical alkylène linéaire en $C_{10}$-$C_{25}$.

**4.** Elastomère selon l'une quelconque des revendications précédentes, **caractérisé en ce que** B représente un radical méthyle, cyclopentyle ou cyclohexyle.

**5.** Elastomère selon l'une quelconque des revendications précédentes, **caractérisé en ce que** $R_1$ et $R_2$, identiques ou différents, représentent chacun un groupement méthyle ou éthyle.

**6.** Elastomère selon l'une quelconque des revendications précédentes, **caractérisé en ce qu'**il est obtenu par hydrosilylation d'un élastomère diénique E, en faisant réagir ledit élastomère diénique E avec un hydrogénosilane de formule (II) suivante :

$$H\text{-}SiR_1R_2\text{-}A\text{-} B,$$

où A, B, $R_1$ et $R_2$ sont tels que définis dans les revendications précédentes, en présence d'un catalyseur d'hydrosilylation.

**7.** Elastomère selon la revendication 6, **caractérisé en ce que** l'élastomère diénique E est l'un des polymères suivants :

(a) tout homopolymère obtenu par polymérisation d'un monomère diène conjugué ayant de 4 à 12 atomes de carbone;
(b) tout copolymère obtenu par copolymérisation d'un ou plusieurs des diènes conjugués, entre eux ou avec un ou plusieurs monomères éthyléniquement insaturés.
(c) tout homopolymère obtenu par polymérisation d'un monomère diène non conjugué ayant de 5 à 12 atomes de carbone,
(d) tout copolymère obtenu par copolymérisation d'un ou plusieurs des diènes non conjugués, entre eux ou avec un ou plusieurs monomères éthyléniquement insaturés.
(e) un copolymère ternaire obtenu par copolymérisation d'éthylène, d'une $\alpha$-oléfine ayant 3 à 6 atomes de carbone avec un monomère diène non conjugué ayant de 6 à 12 atomes de carbone;
(f) un copolymère d'isobutène et d'isoprène (caoutchouc butyle), ainsi que les versions halogénées;
(g) le caoutchouc naturel;
(h) un copolymère oléfinique insaturé dont la chaine comporte au moins des unités monomériques oléfiniques et des unités diéniques;
(i) un mélange de plusieurs des élastomères définis de (a) à (h) entre eux.

**8.** Elastomère selon la revendication 7, **caractérisé en ce que** le monomère diène conjugué est le butadiène-1,3, le 2-méthyl-1,3-butadiène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène ou le 2,4-hexadiène.

**9.** Elastomère selon la revendication 7 ou 8, **caractérisé en ce que** le monomère éthyléniquement insaturé est un monomère vinylaromatique ayant de 8 à 20 atomes de carbone, un monomère nitrile vinylique ayant 3 à 12 atomes de carbone ou un monomère ester acrylique dérivé de l'acide acrylique ou de l'acide méthacrylique avec un alcool ayant 1 à 12 atomes de carbone.

**10.** Elastomère selon la revendication 7 ou 8, **caractérisé en ce que** le monomère oléfinique est l'éthylène ou une $\alpha$-oléfine ayant 3 à 6 atomes de carbone.

11. Elastomère selon l'une quelconque des revendications 6 à 10, **caractérisé en ce que** l'élastomère diénique E est choisi parmi :

- les polybutadiènes (en abrégé "BR"),
- les polyisoprènes (IR) de synthèse,
- le caoutchouc naturel (NR),
- les copolymères statistiques de butadiène, les copolymères statistiques d'isoprène, les copolymères statistiques d'éthylène-diène, plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les copolymères d'éthylène-butadiène (EBR), et
- les mélanges de ces élastomères.

12. Procédé de fabrication d'un élastomère selon l'une quelconque des revendications 1 à 11, **caractérisé en ce qu'**il comprend la réaction d'un élastomère diénique E, tel que défini à l'une quelconque des revendications 6 à 11, avec un hydrogénosilane de formule (II), tel que défini à la revendication 6, en présence d'un catalyseur d'hydrosilylation.

13. Procédé selon la revendication 12, **caractérisé en ce qu'**il comprend l'ajout d'un antioxydant en fin de réaction.

14. Composition comprenant un élastomère selon l'une des revendications 1 à 11 ou obtenu par le procédé selon la revendication 12 ou 13.

15. Pneumatique dont un des éléments constitutifs comprend une composition selon la revendication 14.

## Patentansprüche

1. Dienelastomer, **dadurch gekennzeichnet, dass** es von Dien-Einheiten abgeleitete, entlang der Kette verteilte Einheiten mit einer Seitengruppe der folgenden Formel (I) umfasst:

$$*\text{-SiR}_1\text{R}_2\text{-A-B}$$

in der:

- * für einen Verknüpfungspunkt mit der Elastomerkette steht,
- $R_1$ und $R_2$ gleich oder verschieden sind und jeweils für eine $C_1$-$C_5$-Alkyl-, $C_6$-$C_{14}$-Aryl- oder $C_7$-$C_{11}$-Alkylaromatengruppe steht,
- A für einen $C_3$-$C_{35}$-aliphatischen Rest, der gegebenenfalls durch ein oder mehrere Heteroatome unterbrochen ist, steht,
- B für einen linearen, verzweigten oder cyclischen $C_1$-$C_6$-Kohlenwasserstoffrest steht,

A und B so beschaffen sind, dass der Schmelzpunkt des nicht hydrosilylierten Analogons, H-A-B, weniger als 70 °C beträgt,
und das Elastomer 10 bis 40 Gew.-% der Seitengruppen der Formel (I), bezogen auf das Gesamtgewicht des Elastomers, umfasst.

2. Elastomer nach Anspruch 1, **dadurch gekennzeichnet, dass** A für einen $C_{10}$-$C_{25}$-Rest, der gegebenenfalls durch ein oder mehrere Heteroatome unterbrochen ist, steht.

3. Elastomer nach einem der vorhergehenden Ansprüche, **dadurch gekennzeichnet, dass** A für einen linearen $C_{10}$-$C_{25}$-Alkylenrest steht.

4. Elastomer nach einem der vorhergehenden Ansprüche, **dadurch gekennzeichnet, dass** B für einen Methyl-, Cyclopentyl- oder Cyclohexylrest steht.

5. Elastomer nach einem der vorhergehenden Ansprüche, **dadurch gekennzeichnet, dass** $R_1$ und $R_2$ gleich oder verschieden sind und jeweils für eine Methyl- oder Ethylgruppe stehen.

6. Elastomer nach einem der vorhergehenden Ansprüche, **dadurch gekennzeichnet, dass** es durch Hydrosilylierung

eines Dienelastomers E erhalten wird, indem das Dienelastomer E in Gegenwart eines Hydrosilylierungskatalysators mit einem Hydrogensilan der folgenden Formel (II):

$$H\text{-}SiR_1R_2\text{-}A\text{-}B,$$

wobei A, B, $R_1$ und $R_2$ wie in den vorhergehenden Ansprüchen definiert sind, umgesetzt wird.

7. Elastomer nach Anspruch 6, **dadurch gekennzeichnet, dass** es sich bei dem Dienelastomer E um eines der folgenden Polymere handelt:

(a) jedes Homopolymer, das durch Polymerisation eines konjugierten Dienmonomers mit 4 bis 12 Kohlenstoffatomen erhalten wird;
(b) jedes Copolymer, das durch Copolymerisation von einem oder mehreren der konjugierten Diene miteinander oder mit einem oder mehreren ethylenisch ungesättigten Monomeren erhalten wird;
(c) jedes Homopolymer, das durch Polymerisation eines nichtkonjugierten Dienmonomers mit 5 bis 12 Kohlenstoffatomen erhalten wird;
(d) jedes Copolymer, das durch Copolymerisation von einem oder mehreren der nichtkonjugierten Diene miteinander oder mit einem oder mehreren ethylenisch ungesättigten Monomeren erhalten wird;
(e) ein ternäres Copolymer, das durch Copolymerisation von Ethylen und einem $\alpha$-Olefin mit 3 bis 6 Kohlenstoffatomen mit einem nichtkonjugierten Dienmonomer mit 6 bis 12 Kohlenstoffatomen erhalten wird;
(f) ein Copolymer von Isobuten und Isopren (Butylkautschuk) sowie die halogenierten Versionen;
(g) Naturkautschuk;
(h) ein ungesättigtes olefinisches Copolymer, dessen Kette mindestens olefinische Monomereinheiten und Dieneinheiten umfasst;
(i) eine Mischung von mehreren der von (a) bis (h) definierten Elastomere miteinander.

8. Elastomer nach Anspruch 7, **dadurch gekennzeichnet, dass** es sich bei dem konjugierten Dienmonomer um 1,3-Butadien, 2-Methyl-1,3-butadien, 2,3-Di($C_1$-$C_5$-alkyl)-1,3-butadiene, wie beispielsweise 2,3-Dimethyl-1,3-butadien, 2,3-Diethyl-1,3-butadien, 2-Methyl-3-ethyl-1,3-butadien oder 2-Methyl-3-isopropyl-1,3-butadien, ein Aryl-1,3-butadien, 1,3-Pentadien oder 2,4-Hexadien handelt.

9. Elastomer nach Anspruch 7 oder 8, **dadurch gekennzeichnet, dass** es sich bei dem ethylenisch ungesättigten Monomer um ein vinylaromatisches Monomer mit 8 bis 20 Kohlenstoffatomen, ein Vinylnitril-Monomer mit 3 bis 12 Kohlenstoffatomen oder ein Acrylsäureester-Monomer, das sich von Acrylsäure oder Methacrylsäure mit einem Alkohol mit 1 bis 12 Kohlenstoffatomen ableitet, handelt.

10. Elastomer nach Anspruch 7 oder 8, **dadurch gekennzeichnet, dass** es sich bei dem olefinischen Monomer um Ethylen oder ein $\alpha$-Olefin mit 3 bis 6 Kohlenstoffatomen handelt.

11. Elastomer nach einem der Ansprüche 6 bis 10, **dadurch gekennzeichnet, dass** das Dienelastomer E ausgewählt ist aus:

- Polybutadienen (abgekürzt "BR"),
- synthetischen Polyisoprenen (IR),
- Naturkautschuk (NR),
- statistischen Butadien-Copolymeren, statistischen Isopren-Copolymeren, statistischen Ethylen-Dien-Copolymeren, weiter bevorzugt aus der Gruppe bestehend aus Butadien-Styrol-Copolymeren (SBR), Isopren-Butadien-Copolymeren (BIR), Isopren-Styrol-Copolymeren (SIR), Isopren-Butadien-Styrol-Copolymeren (SBIR) und Ethylen-Butadien-Copolymeren (EBR), und
- Mischungen dieser Elastomere.

12. Verfahren zur Herstellung eines Elastomers nach einem der Ansprüche 1 bis 11, **dadurch gekennzeichnet, dass** es die Umsetzung eines Dienelastomers E gemäß einem der Ansprüche 6 bis 11 mit einem Hydrogensilan der Formel (II) gemäß Anspruch 6 in Gegenwart eines Hydrosilylierungskatalysators umfasst.

13. Verfahren nach Anspruch 12, **dadurch gekennzeichnet, dass** es die Zugabe eines Antioxidans am Ende der Umsetzung umfasst.

**14.** Zusammensetzung, umfassend ein Elastomer nach einem der Ansprüche 1 bis 11 oder ein durch das Verfahren nach Anspruch 12 oder 13 erhaltenes Elastomer.

**15.** Reifen, wobei eines der Aufbauelemente davon eine Zusammensetzung nach Anspruch 14 umfasst.

## Claims

**1.** Diene elastomer, **characterized in that** it comprises units, derived from diene units, distributed along the chain bearing a pendant group of the following formula (I):

$$*\text{-SiR}_1\text{R}_2\text{-A-B}$$

in which:

- * denotes a point of bonding with the elastomer chain
- $R_1$ and $R_2$, which are identical or different, each represent a $C_1$-$C_5$ alkyl, $C_6$-$C_{14}$ aryl or $C_7$-$C_{11}$ aromatic alkyl group
- A represents a $C_3$-$C_{35}$ aliphatic radical, which may be interrupted by one or more heteroatom(s)
- B represents a linear, branched or cyclic $C_1$-$C_6$ hydrocarbon radical

A and B are such that the melting point of the non-hydrosilylated analogue, H-A-B, is less than 70°C
and the elastomer comprises from 10% to 40% by weight of the pendant groups of formula (I), relative to the total weight of the elastomer.

**2.** Elastomer according to Claim 1, **characterized in that** A represents a $C_{10}$-$C_{25}$ radical which may be interrupted by one or more heteroatom(s).

**3.** Elastomer according to either one of the preceding claims, **characterized in that** A represents a linear $C_{10}$-$C_{25}$ alkylene radical.

**4.** Elastomer according to any one of the preceding claims, **characterized in that** B represents a methyl, cyclopentyl or cyclohexyl radical.

**5.** Elastomer according to any one of the preceding claims, **characterized in that** $R_1$ and $R_2$, which are identical or different, each represent a methyl or ethyl group.

**6.** Elastomer according to any one of the preceding claims, **characterized in that** it is obtained by hydrosilylation of a diene elastomer E, by reacting said diene elastomer E with a hydrosilane of the following formula (II):

$$\text{H-SiR}_1\text{R}_2\text{-A-B},$$

where A, B, $R_1$ and $R_2$ are as defined in the preceding claims, in the presence of a hydrosilylation catalyst.

**7.** Elastomer according to Claim 6, **characterized in that** the diene elastomer E is one of the following polymers:

(a) any homopolymer obtained by polymerization of a conjugated diene monomer having from 4 to 12 carbon atoms;
(b) any copolymer obtained by copolymerization of one or more of the conjugated dienes with one another or with one or more ethylenically unsaturated monomers;
(c) any homopolymer obtained by polymerization of a non-conjugated diene monomer having from 5 to 12 carbon atoms;
(d) any copolymer obtained by copolymerization of one or more of the non-conjugated dienes with one another or with one or more ethylenically unsaturated monomers;
(e) a ternary copolymer obtained by copolymerization of ethylene and of an $\alpha$-olefin having from 3 to 6 carbon atoms with a non-conjugated diene monomer having from 6 to 12 carbon atoms;
(f) a copolymer of isobutene and of isoprene (butyl rubber), and also the halogenated versions;
(g) natural rubber;

(h) an unsaturated olefinic copolymer, the chain of which comprises at least olefinic monomer units and diene units;
(i) a mixture of several of the elastomers defined from (a) to (h) with one another.

**8.** Elastomer according to Claim 7, **characterized in that** the conjugated diene monomer is 1,3-butadiene, 2-methyl-1,3-butadiene, 2,3-di($C_1$-$C_5$ alkyl)-1,3-butadienes, such as, for example, 2,3-dimethyl-1,3-butadiene, 2,3-diethyl-1,3-butadiene, 2-methyl-3-ethyl-1,3-butadiene or 2-methyl-3-isopropyl-1,3-butadiene, an aryl-1,3-butadiene, 1,3-pentadiene or 2,4-hexadiene.

**9.** Elastomer according to Claim 7 or 8, **characterized in that** the ethylenically unsaturated monomer is a vinylaromatic monomer having from 8 to 20 carbon atoms, a vinyl nitrile monomer having from 3 to 12 carbon atoms or an acrylic ester monomer derived from acrylic acid or methacrylic acid with an alcohol having 1 to 12 carbon atoms.

**10.** Elastomer according to Claim 7 or 8, **characterized in that** the olefinic monomer is ethylene or an $\alpha$-olefin having from 3 to 6 carbon atoms.

**11.** Elastomer according to any one of Claims 6 to 10, **characterized in that** the diene elastomer E is selected from:

- polybutadienes (abbreviated to "BRs"),
- synthetic polyisoprenes (IRs),
- natural rubber (NR),
- random butadiene copolymers, random isoprene copolymers, random ethylene/diene copolymers, more preferably selected from the group consisting of butadiene/styrene copolymers (SBRs), isoprene/butadiene copolymers (BIRs), isoprene/styrene copolymers (SIRs), isoprene/butadiene/styrene copolymers (SBIRs) and ethylene/butadiene copolymers (EBRs), and
- the mixtures of these elastomers.

**12.** Process for manufacturing an elastomer according to any one of Claims 1 to 11, **characterized in that** it comprises the reaction of a diene elastomer E, as defined in any one of Claims 6 to 11, with a hydrosilane of formula (II), as defined in Claim 6, in the presence of a hydrosilylation catalyst.

**13.** Process according to Claim 12, **characterized in that** it comprises the addition of an antioxidant at the end of the reaction.

**14.** Composition comprising an elastomer according to one of Claims 1 to 11 or obtained by the process according to Claim 12 or 13.

**15.** Tyre, one of the constituent elements of which comprises a composition according to Claim 14.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2004035639 A1
- US 20050239639 A1
- EP 1092731 A
- EP 1554321 A
- EP 1656400 A
- EP 1954705 A
- EP 1957506 A
- FR 3001223


### Littérature non-brevet citée dans la description


- **MACOSKO CW.** Rheology : principles measurement and applications. Wiley-VCH, 1994